Europäisches Patentamt

European Patent Office

Office européen des brevets

(11) Veröffentlichungsnummer: **0 499 664 A1**

# (12) EUROPÄISCHE PATENTANMELDUNG

(21) Anmeldenummer: **91102394.3**

(22) Anmeldetag: **20.02.91**

(51) Int. Cl.5: **B01D 53/34**, //E01C19/10

(43) Veröffentlichungstag der Anmeldung:
**26.08.92 Patentblatt 92/35**

(84) Benannte Vertragsstaaten:
**AT BE CH DE DK ES FR GB GR IT LI LU NL SE**

(71) Anmelder: **WIBAU Maschinen GmbH & Co. KG**
**Wibaustr. 1**
**W-6466 Gründau-Rothenbergen(DE)**

(72) Erfinder: **Schlecht, Karl, Dipl.-Ing.**
**In den Staudenäckern 6**
**W-7024 Filderstadt/Bonlanden(DE)**

(74) Vertreter: **Munderich, Paul, Dipl.-Ing.**
**Frankfurter Strasse 84**
**W-6466 Gründau-Rothenbergen(DE)**

(54) Verfahren zur chemisch-physikalischen Abgasreinigung von Asphaltmischanlagen.

(57) Die Erfindung betrifft ein Verfahren zur chemischphysikalischen Abgasreinigung für Asphaltmischanlagen. Diese zeichnet sich dadurch aus, daß in die Abgasleitung (7) der Heiztrommel (1) gleichzeitig Wasser über Düsen (23) und wahlweise getrennt oder gleichzeitig chemisch-physikalische Wirkstoffe, wie Kalkhydrat, über die Düsen (22) in gesteuerten Mengen eingesprüht und nach Passieren des Entstaubers (8) das Abgas unter den Taupunkt abgekühlt wird und dessen Wärme weitgehend direkt oder indirekt auf die Asphaltzuschlagstoffe übertragen wird, und daß das kondensierte, schlammhaltige Wasser weitgehend zwecks Abkühlung der Trommelabgase und Schlamm-Trockenabscheidung wieder in den Prozeß zurückgeführt wird.

Fig.1

Die Erfindung betrifft ein Verfahren zur chemischphysikalischen Abgasreinigung für Asphaltmischanlagen. Sie beinhaltet eine Methode, um Abgase aus den Heiztrommeln für Asphaltgemische durch die Kombination chemischer und physikalischer Wirkungen zu reinigen.

In der Praxis sind bereits Verfahren bzw. Einrichtungen bekannt, bei denen die in den Abgasen enthaltenen schädlichen Bestandteile CO, CHX und weitere Schadstoffe auf die zulässigen Werte gemindert werden. Bei einem dieser Verfahren erfolgt die Minderung durch Nachverbrennung der Trommelabgase, z.B. durch deren Rückführung in die Brennerzone einer parallel dazu betriebenen Trokkentrommel für Neumineralien.

Bei einem anderen bekannten Verfahren wird in die Abgasleitung Kalkhydratpulver oder andere dgl.Stoffe eingeblasen und dadurch in geringem Maße ein bestimmter Anteil Schadstoffe gebunden, der im nachgeschalteten Staubfilter auf bekannte Weise ausgetragen wird.

Wird dagegen nur eine Trommel verwendet und in dieser ein Gemisch von Neumineralien und Asphaltgranulat erhitzt, so entstehen bei dieser im Gleichstromverfahren arbeitenden Trommel hohe Abgastemperaturen,
die in der Regel 20° C bis 40° c über der Mineralmischguttemperatur, d.h. bei einer Abgastemperatur von 180° bis 240° C, liegen.

Wenn zur Minderung der schädlichen Abgase Kalkhydrat eingeblasen wird, ist dessen neutralisierende Wirkung im Hinblick auf die hohe Temperatur und die niedere spezifische Feuchte des heißen Abgases gering. Wird diese Feuchte durch zusätzliche Wassereinsprühung auf der Eintragsseite der Trommel gesteigert, dann ist ein zusätzlicher Heizaufwand notwendig, um dieses Wasser wieder verdampfen zu lassen.

Es ist deshalb Aufgabe der vorliegenden Erfindung, eine Einrichtung zu schaffen, mit der die Abgase im Sinne einer Minderung von CO, $SO_2$ und CHX-Bestandteilen gereinigt und gleichzeitig die Abgaswärme auf die für die Asphaltaufbereitung notwendigen Zuschlagstoffe zu übertragen, in dem die Abgase durch den Wärmeentzug unter den Taupunkt abgekühlt werden.

Darüberhinaus sollen durch Übertragung der Wärme auf die Zuschlagstoffe die im Abgas enthaltenen Wassermengen kondensieren, und die Rückführung der dabei zum Teil mit ausgeschiedenen, giftigen Schlämme in den Prozeß umweltfreundlich ermöglichen.

Erfindungsgemäß wird die Hauptaufgabe dadurch gelöst,
daß in die Abgasleitung der Heiztrommel gleichzeitig Wasser über Düsen und wahlweise getrennt oder gleichzeitig chemisch-physikalische Wirkstoffe wie Kalkhydrat in gesteuerten Mengen eingesprüht und nach Passieren des Entstaubers das Abgas unter den Taupunkt abgekühlt wird und dessen Wärme weitgehend direkt oder indirekt auf die Asphaltzuschlagstoffe übertragen wird, und daß das kondensierte eventuell schlammhaltige Wasser weitgehend zwecks Abkühlung der Trommelabgase und Schlamm-Trockenabscheidung, wie oben geschildert, wieder in den Prozeß zurückgeführt wird.

Dabei ist vorgesehen, daß die eingesprühte Flüssigkeitsmenge durch eine Temperatursonde im Entstauber so gesteuert wird, daß automatisch die Temperatur der Abgase durch die Verdampfungskälte auf einen über dem Kondensationspunkt liegenden Wert von ca. 100° bis 120° C zurückgeführt wird, und daß die eingesprühte Wirkstoffmenge durch eine im Kamin eingebaute Abgassonde so geregelt wird, daß der zulässige Höchstwert für CO, $SO_2$ und CHX nicht überschritten wird.

Die Regelung der eingespritzten Wassermenge und des Wirkstoffes bzw. die Messung der Temperatur über die Temperatursonde und die Regelung durch die Abgassonde erfolgt intervallweise, d.h. mindestens in dem Zeitabstand, der der Strömungszeit zwischen Einsprühdüse und Sonde entspricht.

Im weiteren ist vorgesehen, daß der dem Entstauber verbundene Exhaustor bzw. Ventilator in aller Regel zwischen dem Wärmetauscher und dem Kamin angeordnet ist.

Ein weiteres wesentliches Merkmal ist, daß die von der Trockentrommel durch den Abgaskanal in den Entstauber führenden Abgase in den unteren Teil eines mit Füllkörpern versetzbaren Sprühturmes eintreten und verwirbelt nach oben strömen, und zwar entgegen dem durch Einblasen der Düsen erzeugten Wassersprühregens, und daß die so sich abkühlenden und ausgewaschenen Gase durch den Exhaustor in den Kamin geführt werden, wobei die dort noch stattfindende Wasserabscheidung durch die Fliehkraft des Exhaustors und die Drallblenden bzw. die spiralförmigen Wasserrinnen auf der Innenseite des Kamins unterstützt werden, wobei das unten im Turm sich sammelnde 80° bis 90° C heiße Wasser durch eine Pumpe zum Mineralstoffwärmetauscher und dann zum Kaltwasserbehälter gedrückt wird, und daß weiterhin dieses Wasser von den dort abgehenden Pumpen einerseits zu den Düsen des Sprühturmes und andererseits zu den Düsen im Abgaskanal der Trockentrommel gefördert wird.

Eine Abänderung des Verfahrens sieht vor, daß die entstaubten Abgase vor Eintritt in den Sprühturm durch einen Gas-Wasserwärmetauscher geführt werden, der erlaubt, frostschutzmittelhaltiges Heizwasser oder Thermalöl im geschlossenen Kreis zu den Mineralwärmetauschern zu fördern, und daß das in diesen Gas-Wasserwärmetauscher eintretende Wasser zuvor angewärmt wird, und zwar durch das sich unten im Sprühturm sammelnde Sprühwasser, d.h. unter Einschaltung üblicher Flüssigkeitswärmetauscher, seine Wärme auf das Heizwasser überträgt und gleichzeitig abgekühlt wird, und daß weiterhin dieses so abgekühlte schlammhaltige Sprühwasser aus dem unteren Teil des Sprühturmes durch Pumpen im offenen Kreislauf den Sprühdüsen des Turmes bzw. Düsen des Primärabgaskanals zugeführt wird und das im übrigen überschüssige kondensierte Wasser in den Abfluß austreten kann.

Die Einspritzung von Wasser oder schlammartigem Wasser durch die Düsen kann somit vermindert und der Prozeß thermisch optimiert werden.

Eine weitere Abänderung des Verfahrens zeichnet sich dadurch aus, daß die teilweise entstaubten Abgase nach Passieren des Entstaubers in den zur Trockentrommel-Materialdosierung gehörenden Behälter für grobes Material zugeführt werden und dort zwecks Abkühlung und Kondensation auf bekannte Weise ein Steingerüst in diesem Behälter durchströmen, und daß dort austretendes schlammhaltiges Kondenswasser dem Abgaskanal durch die Düse zugeführt wird (z.B. DE 39 11 272).

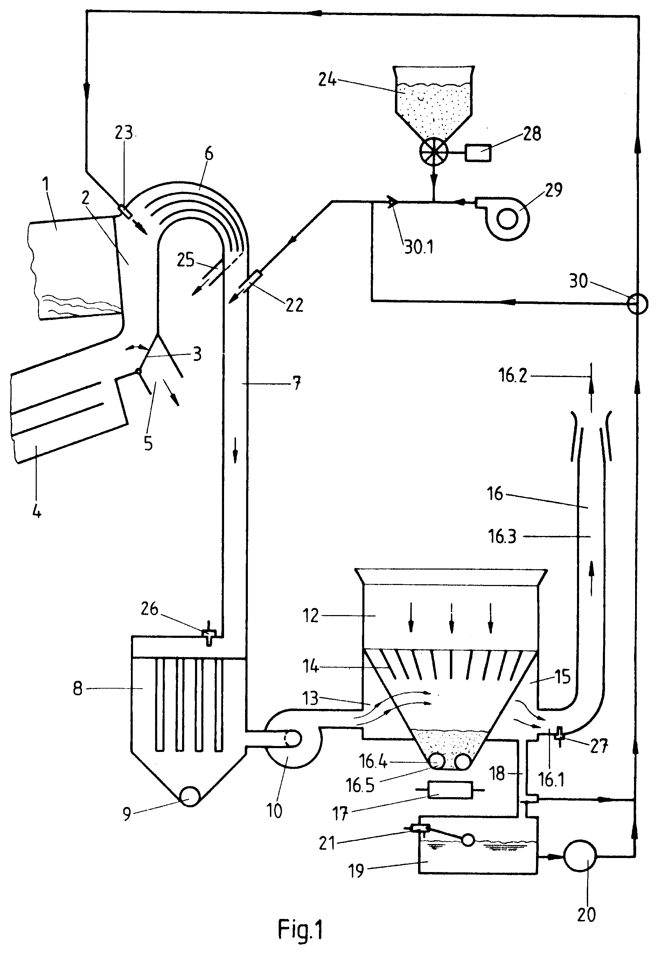

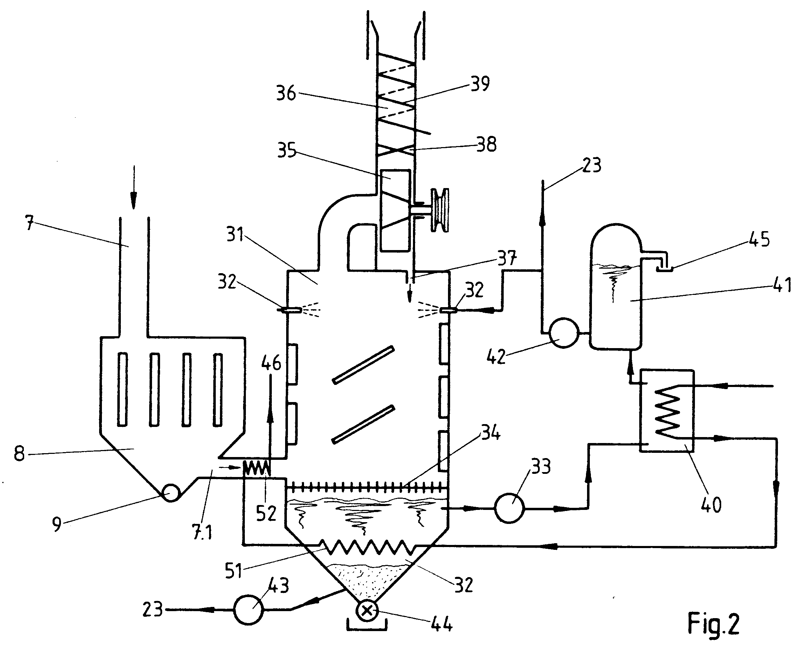

Das Verfahren wird durch die beigefügten Zeichnungen, Figur 1, die den Gesamtablauf des Verfahrens, und Figur 2, die die Gruppierung um den Kühlturm zeigt, näher erläutert.

## Beschreibung des Verfahrensablaufes

Das Gut wird der Asphaltdeponie bzw. der Mineralstoffdeponie entnommen und über einen Überkornaustrag dem Fuß des Kaltelevators zugeleitet, von dem aus es der hoch liegenden Heiztrommel 1 zugeführt wird.

Der Absaugekopf ist als Materialaustragsschacht 2 ausgebildet und durch eine unten liegende Pendelklappe 3 entweder auf die Siebmaschine 4 oder auf der Bypass-Leitung 5 durch eine Umlenkklappe 3 schaltbar. Der Materialaustragsschacht 2 führt im weiteren nach oben durch die als Grobentstauber 6 wirksamen Leitbleche ab, die entweder auf die Siebmaschine 4 zurückführen oder aber im wesentlichen, und zwar primär, in den Abgaskanal 7 überführen. Der Abgaskanal 7 mündet in den Entstauber 8, der als Taschenfilter zu bezeichnen ist, und dessen seitlicher Abgang durch einen Exhaustor 10 beherrscht wird. Der Exhaustor 10 fördert in den Vordoseur 12 des Eingangssammlers 13, der durch Lamellen 14 vom Ausgangsammler 15 getrennt ist. Im Ausgangsammler 15 sind gasführende Kühlrohre 16.4 installiert, die in ihrer austrittsseitigen Zusammenfassung 16.1 eine zum Kamin 16.2 führende Leitung 16.3 beinhalten, wobei diese Leitung 16.3 am Ende eingeschnürt und mit einem lavallartigen Ring versehen ist, durch den dieses Gas zum Kamin 16.2 beschleunigt wird.

Unter dem Ausgangsammler 15 ist ein Niveauregler 17 installiert, der den Dunstablauf 18 so beeinflußt, daß dieser entweder bei geschlossener Stellung zum Zusatzstoffsilo 24 oder bei geöffneter Stellung den Weg zu der im Wassertank 19 durch den Schwimmschalterüberlauf 21 gesteuerten Wasserpumpe 20 freigibt.

Die Steuerung des Dunstablaufes 18 steht in Verbindung mit dem Dreiwegehahn 30, der die im primären Abgaskanal 7 im oberen Bereich angeordnete Kalkdüse 22 und die Wasserdüse 23 reguliert. Die ebenfalls von der Stellung des Dunstablaufes 18 abhängige Zusatzstoffdosierung führt in das Zusatzstoffsilo 24.

Der Grobstoffaustrag 25 befindet sich unmittelbar am Ende des Grobentstaubers 6, der alternativ auch für einen bekannten Prall- oder Zyklonentstauber stehen kann.
Die Kontrolle des Abgases erfolgt durch die Temperatursonde 26 im Entstauber 8, während die Abgassonde 27 sich im Bereich des Zusatzstoffdosierers 28 befindet.

Zwischen Gebläse 29 und der Kalkdüse 22 ist ein Rückschlagventil 30.1 vorgesehen, das verhindert, daß Flüssigkeit zurück zur Kalkdosierung geht. Durch Umschaltung des Dreiwegehahns 30 ist es möglich, Wasser- und Kalkleitung getrennt zu führen.

Da die Vordoseure 12 für die Mineralstoffe häufig sehr weit von der eigentlichen Asphalt-Mischanlage entfernt stehen und die Einrichtungen zur Wärmeübertragung von Gas auf Mineralstoffe relativ aufwendig sind, wird bei einer weiteren Ausgestaltung der Erfindung das Wärmefernübertragungsmittel Heizwasser oder Thermalöl herangezogen. Am einfachsten und kostengünstigsten wird gem.Figur 2 das Heizwasser durch Einsprühen im Kühlturm gegen die von unten anströmenden, heißen Abgase erzeugt. Daß sich dann im unteren Teil des Sprühturmes 31 sammelnde Wasser wird über Pumpe 33 im offenen Kreislauf durch die Mineralstoffwärmetauscher 40 und dem Kaltwasserbehälter 41 - als Reservetank - geführt. Anschließend tritt dann das abgekühlte Heizwasser aus der Pumpe 42 wieder in die Sprühdüsen des Turmes 31 bzw. der Abgasleitung 7.

Üblicherweise ist der Sprühturm 31 mit Füllkörpern ausgefüllt, die den Abscheidegrad und die Wärmetauscher Wirkung erhöhen, wenn von oben Wasser gegen den kommenden Gasstrom strömt. Unten im Sprühturm ist ein Schlammaustrag 44, z.B. in Form eines Zellenrades,angebracht.

Überschüßiges Wasser- bedingt durch die Eigenfeuchte der getroffenen Zuschlagstoffe - wird über einen Überlauf 45 des Kalkwassertanks 41 der Kanalisation zugeführt.

Für den Fall, daß das Heizwasser frostsicher sein muß, weil die Asphaltanlage in kältegefährdeten Gebieten, z.B. über das Wochenende erkaltet steht, muß dem Heizwasser Frostschutzmittel zugesetzt werden, wobei auch Thermalöl oder andere Medien verwendet werden.

Dies erfordert einen geschlossenen Heizkreislauf, der getrennt vom Gas- bzw. Sprühwasser ist.

Gemäß einer weiteren Ausgestaltung der vorliegenden Erfindung wird daher vorgeschlagen, vor dem Sprühturm 31 in die Abgasleitung 7.1 einen Gaswärmetauscher 52 einzubauen. Diesem fließt vom Mineralstoff-Wärmetauscher 40 das Heizmedium zu. Dieses Medium tritt dann aus und wird, erhitzt auf ca. 90° bis 100° C, den Wärmetauschern 46 zugeführt, die in den Materialboxen angeordnet sind, um das Material Kies, Sand usw. zu erhitzen. Es strömt anschlwieder abgekühlt zurück (30° bis 50° C) und gelangt dann wieder zum Mineralstoff-Wärmetauscher 40.

Das Heizwasser durchströmt zunächst die Wärmetauscher 52, kommt dann zurück zum Sprühturm 31, wird vorgewärmt durch einen Flüssigkeitswärmetauscher 51, welcher die Wärme des im Boden des Sprühturmes 31 befindlichen ca. 80° bis 90° C heißen Wassers auf das frostgeschützte Heizwasser überträgt. Dieses wird dann mit der Temperatur auf 60° bis 70° C angehoben und strömt anschließend durch den Gas-Wasser-Wärmetauscher, der dem Sprühturm 31 vorgeschaltet ist und wird dort auf nahezu 100° C erhitzt.

Unten im Sprühturm 31 geht eine Leitung zu einer Schlammpumpe 43 ab. Diese fördert das Schlammwasser zu den Düsen 23, wo es zum Zwecke der Kühlung eingedüst wird. Hier wird dann der Schlamm abgetrocknet und in den Entstauber 8 geführt.

Der Flüssigkeitswärmetauscher 51 besteht entweder aus Spiralen, die im Sumpf des Sprühturmes 31 angeordnet sind, oder in Form eines getrennten Aggregates, das z.B. von der Flüssigkeit der Pumpe 33 durchströmt wird und vom Heizwasserrücklauf des Wärmetauschers 40 andererseits.

Diese Ausgestaltung der Erfindung hat den Vorzug, daß einerseits ein geschlossener Heizkreislauf von hoher Temperatur zur Verfügung steht, andererseits das Abgas im Niedertemperaturbereich wirksam und ökonomisch im Sprühturm 31 ausgewaschen und dabei die erwähnten Schadstoffe niedergeschlagen werden. Parallel zur Rückgewinnung der gesamten Abgasenergie, welche in Form von Wasserdampf darin gespeichert ist,spielt die geringe, durch die eigentliche Temperaturabsenkung gewonnene Energie hier noch eine positive Rolle.

Die Anordnung des Exaustors 35 hinter dem und oberhalb des Sprühturmes 31 hat im übrigen die ökonomische Wirkung einer zusätzlichen Wasserabscheidung und einer geringfügigen Druckerhöhung. Dies führt dazu, daß eventuell im Abgas noch vorhandener Nebel wieder in Wasser/Gas überführt wird und dadurch ein nicht nur gereinigter sondern auch nebelfreier Abgasstrom aus dem Kamin in die Atmosphäre tritt.

**Patentansprüche**

1. Verfahren zur chemisch-physikalischen Abgasreinigung für Asphaltmischanlagen, dadurch gekennzeichnet,

   **daß** in die Abgasleitung (7) der Heiztrommel (1) gleichzeitig Wasser über Düsen (23) und wahlweise getrennt oder gleichzeitig chemisch-physikalische Wirkstoffe, wie Kalkhydrat, über die Düsen (22) in gesteuerten Mengen eingesprüht und nach Passieren des Entstaubers (8) das Abgas unter den Taupunkt abgekühlt wird und dessen Wärme weitgehend direkt oder indirekt auf die Asphaltzuschlagstoffe übertragen wird..

2. Verfahren nach Anspruch 1, dadurch gekennzeichnet,

   **daß** das kondensierte, eventuell schlammhaltige Wasser weitgehend zwecks Abkühlung der Trommelabgase und Schlamm-Trockenabscheidung wieder in den Prozeß zurückgeführt wird.

3. Verfahren nach Anspruch 1, dadurch gekennzeichnet,

   **daß** die eingesprühte Flüssigkeitsmenge durch die Temperatursonde (26) im Entstauber (8) so gesteuert wird,

   daß selbsttätig die Temperatur der Abgase durch die Verdampfungskälte auf einen über dem Kondensationspunkt liegenden Wert von ca. 100° bis 120° C zurückgeführt wird, und

   **daß** die eingesprühte Wirkstoffmenge durch eine im Kamin (16.2) eingebaute Abgassonde (27) so geregelt wird, daß der zulässige Höchstwert für CO, $SO_2$ und CHX nicht überschritten wird.

4. Verfahren nach Anspruch 1 und 3, dadurch gekennzeichnet,

   **daß** die Regelung der eingespritzten Wassermenge und des Wirkstoffes bzw. die Messung der Temperatur über die Temperatursonde (26) und die Regelung durch die Abgassonde (27) intervallweise, mindestens in dem Zeitabstand erfolgt, der der Strömungszeit zwischen Einsprühdüse und Sonde entspricht.

5. Verfahren nach Anspruch 1, dadurch gekennzeichnet,

   *daß* der dem Entstauber (8) verbundene Exhaustor (35) bzw. der Ventilator (10) vorzugsweise zwischen dem Wärmetauscher und dem Kamin (16.2) angeordnet ist.

6. Verfahren nach Anspruch 1, dadurch gekennzeichnet,

   *daß* die von der Trockentrommel (1) durch den Abgaskanal (7) in den Entstauber (8) führenden Abgase in den unteren Teil eines fallweise mit Füllkörpern versehenen Sprühturmes (31) eintreten und verwirbelt nach oben strömen, entgegen dem durch Einblasen der Düsen (23) erzeugten Wassersprühregens, und daß die so sich abkühlenden und ausgewaschenen Gase durch den Exhaustor (35) in den Kamin (36) geführt werden, wobei die dort noch stattfindende Wasserabscheidung durch die Fliehkraft des Exhaustors (35) und die Drallblenden (38), bzw. die spiralförmigen Wasserrinnen (36) auf der Innenseite des Kamins,unterstützt werden, wobei das unten im Turm sich sammelnde 80° bis 90° C heiße Wasser durch die Pumpe (33) zum Mineralstoff-Wärmetauscher (40) und dann zum Kaltwasserbehälter (41) gedrückt wird, und

   *daß* weiterhin dieses Wasser von den dort abgehenden Pumpen (42) einerseits zu den Düsen (32) des Sprühturmes (31) und andererseits zu den Düsen (23) im Abgaskanal (7) der Trockentrommel (1) gefördert wird.

7. Abänderung des Verfahrens nach Anspruch 1, dadurch gekennzeichnet,

   *daß* die entstaubten Abgase vor Eintritt in den Sprühturm (31)

   durch einen Gas-Wärmetauscher (52) geführt werden, der erlaubt, frostschutzmittelhaltiges Heizwasser oder Thermalöl im geschlossenen Kreis zu den Mineralwärmetauschern (40) zu fördern, und daß das in diesen Gas-Wärmetauscher eintretende Wasser zuvor angewärmt wird durch das sich unten im Sprühturm (31) sammelnde Sprühwasser, d.h. unter Einschaltung üblicher Flüssigkeitswärmetauscher seine Wärme auf das Heizwasser überträgt und gleichzeitig abgekühlt wird, und

*daß* weiterhin dieses so abgekühlte eventuell schlammhaltige Sprühwasser aus dem unteren Teil des Sprühturms (31) durch Pumpen (43) im offenen Kreislauf den Sprühdüsen (32) des Sprühturmes (31) bzw. Düsen (23) des Abgaskanals (7) zugeführt wird und das im übrigen überschüssige, kondensierte Wasser in den Abfluß austreten kann.

8. Abänderung des Verfahrens nach Anspruch 1, dadurch gekennzeichnet,

   *daß* die teilweise entstaubten Abgase nach Passieren des Entstaubers (8) in den zur Trockentrommel-Materialdosierung gehörenden Behälter für grobes Material zugeführt werden und dort zwecks Abkühlung und Kondensation auf bekannte Weise ein Steingerüst in diesem Behälter durchströmen, und

   *daß* dort austretendes, schlammhaltiges Kondenswasser dem Abgaskanal (7) durch die Düse (23) zugeführt wird.

Fig.1

Fig.2

EP 0 499 664 A1

| | Europäisches Patentamt | **EUROPÄISCHER RECHERCHENBERICHT** | Nummer der Anmeldung |
|---|---|---|---|
| | | | EP 91 10 2394 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 540 978 (WIBAU AG)<br>* Ansprüche; Abbildungen 1,2 *<br>--- | 1,2,5,6,7,8 | B 01 D 53/34 //<br>E 01 C 19/10 |
| Y | US-A-4 364 910 (H.P. WILLET et al.)<br>* Spalte 3, Zeilen 5-58; Abbildung 1 *<br>--- | 1,2,5,6,7,8 | |
| A | DE-A-3 916 705 (INSTITUT FÜR FORSCHUNG UND RATIONALISIERUNG DER ZUCKERINDUSTRIE)<br>* Spalte 2, Zeile 66 - Spalte 4, Zeile 67; Abbildung 1 *<br>--- | 1,2,6,7,8 | |
| A | EP-A-0 151 398 (DEUTSCHE FORSCHUNGS- UND VERSUCHSANSTALT FÜR LUFT- UND RAUMFAHRT e.V.)<br>* Seite 4, Zeile 10 - Seite 6, Zeile 7; Abbildung 1 *<br>--- | 1,2,6,7,8 | |
| A | EP-A-0 391 427 (DEUTSCHE ASPHALT GmbH)<br>* Spalte 2, Zeilen 14-52; Anspruch 1 *<br>----- | 1,6 | |
| | | | **RECHERCHIERTE SACHGEBIETE (Int. Cl.5)**<br><br>B 01 D<br>E 01 C |

Der vorliegende Recherchenbericht wurde für alle Patentansprüche erstellt

| Recherchenort | Abschlußdatum der Recherche | Prüfer |
|---|---|---|
| DEN HAAG | 18-10-1991 | EIJKENBOOM A.F. |